**Europäisches Patentamt**

**European Patent Office**

**Office européen des brevets**

(19)

(11) Veröffentlichungsnummer : **0 352 586 B1**

# EUROPÄISCHE PATENTSCHRIFT

(12)

(45) Veröffentlichungstag der Patentschrift :
**12.06.91 Patentblatt 91/24**

(51) Int. Cl.$^5$ : **B60S 1/36, B60S 1/24**

(21) Anmeldenummer : **89113050.2**

(22) Anmeldetag : **15.07.89**

(54) **Scheibenwischeranlage, insbesondere für Kraftfahrzeuge.**

(30) Priorität : **26.07.88 DE 3825321**

(43) Veröffentlichungstag der Anmeldung :
**31.01.90 Patentblatt 90/05**

(45) Bekanntmachung des Hinweises auf die
Patenterteilung :
**12.06.91 Patentblatt 91/24**

(84) Benannte Vertragsstaaten :
**ES FR GB IT SE**

(56) Entgegenhaltungen :
**BE-A- 902 964**
**DE-A- 3 405 677**
**DE-A- 3 607 704**

(73) Patentinhaber : **SWF Auto-Electric GmbH**
**Stuttgarter Strasse 119 Postfach 135**
**W-7120 Bietigheim-Bissingen (DE)**

(72) Erfinder : **Baumgarten, Peter**
**Paul Aldinger Strasse 27**
**W-7141 Steinheim 2 (DE)**
Erfinder : **Egner-Walter, Bruno**
**Käferflugstrasse 43**
**W-7100 Heilbronn (DE)**
Erfinder : **Schmid, Eckhardt**
**Heilbronner Strasse 62**
**W-7129 Brackenheim (DE)**
Erfinder : **Scholl, Wolfgang**
**Forststrasse 29**
**W-7121 Gemmrigheim (DE)**

EP 0 352 586 B1

**Beschreibung**

Die Erfindung bezieht sich auf eine Scheibenwischeranlage, die insbesondere für Kraftfahrzeuge verwendet werden soll und die Merkmale aus dem Oberbegriff des Anspruchs 1 aufweist.

Aus der Praxis sowie aus einer Reihe von Druckschriften sind Scheibenwischeranlagen für Kraftfahrzeuge bekannt, bei denen während des Betriebs der pendelnden Bewegung des Wischarms und damit des vom Wischarm getragenen Wischblatts eine Bewegung des Wischblatts im wesentlichen in seiner Längsrichtung überlagert ist. Diese Verschiebung des Wischblatts wird dadurch erreicht, daß man die wirksame Länge des Wischarms verändert. Der Wischarm kann dazu teleskopisch aufgebaut sein und einen Kolben aufweisen, der mittels eines Getriebes gegenüber einem nur pendelnden Führungsgehäuse verschoben wird. Ein solcher Aufbau ist zum Beispiel aus der DE-C-34 05 131, der EP-A-0 218 192 oder der EP-A-0 250 294 bekannt. Bei einer anderen Konstruktion wie sie in der DE-OS 34 05 677 gezeigt wird, ist im wesentlichen nur das Gelenk zwischen dem Wischblatt und dem Wischarm gegenüber dem Wischarm verstellbar.

Bei den in den genannten Druckschriften gezeigten Scheibenwischeranlagen wird die Bewegung zur Veränderung der wirksamen Länge des Wischarms über eine Koppel aus der Drehbewegung einer Kurbel abgeleitet, die drehfest auf einer koaxial zur Wischerwelle laufenden Hubwelle sitzt.

Aus der DE-C-34 05 131 und der EP-A-0 218 192 ist es bekannt, die Hubwelle während des Betriebs der Scheibenwischeranlage dauernd in der gleichen Drehrichtung anzutreiben. Sie dreht sich deshalb in der einen Hälfte eines Wischzyklus gleichsinnig und in der anderen Hälfte eines Wischzyklus gegensinnig zur Wischerwelle. Das hat zur Folge, daß das im Vorlauf vom Wischblatt bestrichene Wischfeld und das im Rücklauf bestrichene Wischfeld unterschiedlich sind.

Bei der Scheibenwischeranlage aus der DE-A-34 05 677 wird die Hubwelle über eine Hubschwinge jeweils gegensinnig zur Wischerwelle angetrieben. Dazu ist die Hubschwinge über eine Koppel mit einem Zwischenhebel verbunden, der eine fahrzeugfeste Drehachse besitzt. Eine Treibstange ist sowohl an den Zwischenhebel als auch an eine an der Wischerwelle befestigten Wischerwellenschwinge angelenkt, die über einen Kurbeltrieb von einem Elektromotor angetrieben wird. Durch die Gegenläufigkeit der Wischerwelle und der Hubwelle führen schon kleine Schwenkwinkel der auf der Hubwelle sitzenden Hubkurbel zu einer starken Veränderung des Winkels zwischen der Hubkurbel und dem Wischarm und damit zu einer großen Längenänderung des Wischarms.

Aus der EP-A-0 250 294 ist es bekannt, die Drehrichtung der Hubwelle innerhalb eines halben Wischzyklus zu ändern. Die Hubwelle dreht sich also innerhalb eines halben Wischzyklus sowohl gleich- als auch gegensinnig zur Wischerwelle. Die Hubwelle wird über eine Hubschwinge angetrieben, die Teil eines Kurbeltriebes ist, dessen andere Kurbel über eine Koppel mit der Hubschwinge verbunden ist und durch ein Ritzel gebildet wird, das mit einem feststehenden Zahnkranz kämmt. Eine solche Anlage ist wegen des Ritzels und des Zahnkranzes sehr teuer. Insbesondere sollen nämlich Ritzel und Zahnkranz auch mit sehr wenig Spiel miteinander kämmen, um geräuscharm zu arbeiten.

Der Erfindung liegt die Aufgabe zu Grunde, eine Scheibenwischeranlage mit den Merkmalen aus dem Oberbegriff des Anspruchs 1, so weiterzuentwickeln, daß bei kostengünstiger Herstellung eine leichte Anpassung des Wischfeldes an unterschiedliche Scheibengrößen möglich ist.

Diese Aufgabe wird erfindungsgemäß durch eine Scheibenwischeranlage gelöst, die die Merkmale aus dem Oberbegriff des Anspruchs 1 aufweist und bei der die Koppel während einer Verschwenkung des Zwischenhebels von einer Umkehrlage zur anderen einen Totpunkt durchläuft, in dem sie die Richtung ihrer Längsbewegung umkehrt. Somit kehrt die Hubwelle nicht nur in den Endlagen des Wischarms, sondern auch zwischen den Endlagen des Wischarms ihre Drehrichtung um, so daß sie während eines halben Wischzyklus teilweise gleichsinnig und teilweise gegensinnig zur Wischerwelle dreht. Dazu wird kein teures Ritzel und kein teurer Zahnkranz benötigt. Bei einer erfindungsgemäßen Scheibenwischeranlage kann man unterschiedliche Drehwinkel der Hubwelle im Gleichsinn und im Gegensinn zur Wischerwelle leicht dadurch erhalten, daß man den Totpunkt der Koppel verändert.

Vorteilhafte Weiterbildungen und Verbesserungen der im Hauptanspruch angegebenen Scheibenwischeranlage kann man dadurch erhalten, das man diese mit den Merkmalen aus den einzelnen Unteransprüchen ausstattet.

Besonders vorteilhaft ist es, wenn gemäß Anspruch 3 bei einer Bewegung des Wischblatts aus einer Parkstellung Wischerwelle und Hubwelle zunächst gleichsinnig drehen. Dies ermöglicht es, die Hubwelle und die Wischerwelle oberhalb eines tangential zu den beiden Wellen ausfahrbaren Teils des Wischarms anzuordnen, so daß sich das von der Hubwelle antreibbare Getriebe sowie eventuell ein dieses Getriebe aufnehmendes Gehäuse zumindest in der Parkstellung des Wischarms weitgehend unterhalb der Unterkante der zu wischenden Scheibe befinden können.

Den Totpunkt der Koppel erhält man auf vorteilhafte Weise dadurch, daß gemäß Anspruch 4 die Koppel an den Zwischenhebel an einem solchen Punkt angelenkt ist, daß bei einem Schwingen des Zwischenhebels der Hebelarm von der Achse des Zwischenhebels zum Anlenkpunkt mit der Längsrichtung der Koppel zur Deckung kommt.

Besonders vorteilhaft ist es auch, wenn der wirksame Hebelarm zwischen der Zwischenhebelachse und einer den Zwischenhebel antreibenden Treibstange kleiner ist als der wirksame Hebelarm zwischen Zwischenhebelachse und Koppel. Dadurch erhält man ein besonders großen Weg der Koppel.

Es kann zweckmäßig sein, daß die Koppel und die Treibstange in Richtung der Achse des Zwischenhebels in einem Abstand voneinander mit dem Zwischenhebel verbunden sind. Dadurch ist es möglich, die Gelenkachsen an den Enden der beiden Stangen weitgehend parallel zueinander auszurichten. Auch können die Platzverhältnisse in der Nähe des Zwischenhebels einen Abstand von Koppel und Treibstange dort günstig erscheinen lassen.

Der Zwischenhebel wird gemäß Anspruch 11 vorteilhafterweise auf derselben Seite der Wischerwelle angeordnet wie der Antriebsmotor. Ist eine zweite Wischerwelle zum Antrieb eines zweiten Wischarms vorhanden, sei dieser nun hubgesteuert oder nicht, so wird eine Anordnung des Zwischenhebels zwischen den beiden Wischerwellen bevorzugt. Zweckmäßigerweise wird gemäß Anspruch 13 ein Tragrahmen, an dem der Wischermotor und/oder ein oder mehrere Lager für Wischerwellen befestigt sind, auch zur Befestigung des Zwischenhebels benutzt. Die Scheibenwischeranlage kann dann abgesehen von den Wischarmen und den Wischblättern, als Einheit im Kraftfahrzeug montiert werden.

Vorteilhafterweise ist der Zwischenhebel über eine Treibstange von einer mit der den Wischarm mit dem verschiebbaren Wischblatt tragenden Wischerwelle drehfest verbundenen Wischerwellenschwinge antreibbar. Dadurch wird auf einfache Weise erreicht, daß die Umkehrpunkte der Wischerwellenschwinge und des Zwischenhebels zeitlich übereinstimmen und die Wischfelder beim Vor- und Rücklauf des Wischblatts gleich sind.

Eine vorteilhafte Anordnung erhält man, wenn sich eine Schubstange die vom Antriebsmotor bewegbar und an die Wischerwellenschwinge angelenkt ist, und eine Treibstange auf gegenüberliegenden Seiten der Wischerwelle befinden. Ebenfalls günstig ist es, wenn sich die Koppel und die Treibstange, in Richtung der Wischerwelle betrachtet, axial versetzt zueinander auf gegenüberliegenden Seiten der Wischerwellenschwinge befinden.

Der Zwischenhebel kann über eine Treibstange auch direkt von einer Kurbel des Antriebsmotors antreibbar sein.

Die Anordnung der verschiedenen Längsstangen wird erleichtert, wenn der Zwischenhebel und die Wischerwellenschwinge gemäß Anspruch 18 gleichsinnig antreibbar sind.

Mehrere Ausführungsbeispiele einer erfindungsgemäßen Scheibenwischeranlage sind in den Zeichnungen dargestellt. Anhand der Figuren dieser Zeichnungen wird die Erfindung nun näher erläutert.

Es zeigen

Fig.1 eine Draufsicht auf eine Windschutzscheibe eines Kraftfahrzeugs mit den außen sichtbaren Teilen einer erfindungsgemäßen Scheibenwischeranlage,

Fig. 2 die verdeckten Teile einer Scheibenwischeranlage nach Figur 1 zum Antrieb eines hubgesteuerten und eines herkömmlichen Wischarms, dessen Länge unveränderlich ist,

Fig. 3 eine Ansicht der Scheibenwischeranlage nach Fig. 2 in Richtung des Pfeiles F, wobei der Klarheit halber für das Verständnis unwesentliche Teile weggelassen sind,

Fig. 4 eine vergrößerte Ansicht des von der Hubwelle angetriebenen Kurbelgetriebes zur Längenänderung des einen Wischarms,

Fig. 5 die Prinzipskizze eines zweiten Ausführungsbeispiels, das jedoch ohne Kreuzlenker aufgebaut ist, und

Fig. 6 die Prinzipskizze eines dritten Ausführungsbeispiels, bei dem der Zwischenhebel über eine Treibstange direkt mit einer Motorkurbel verbunden ist.

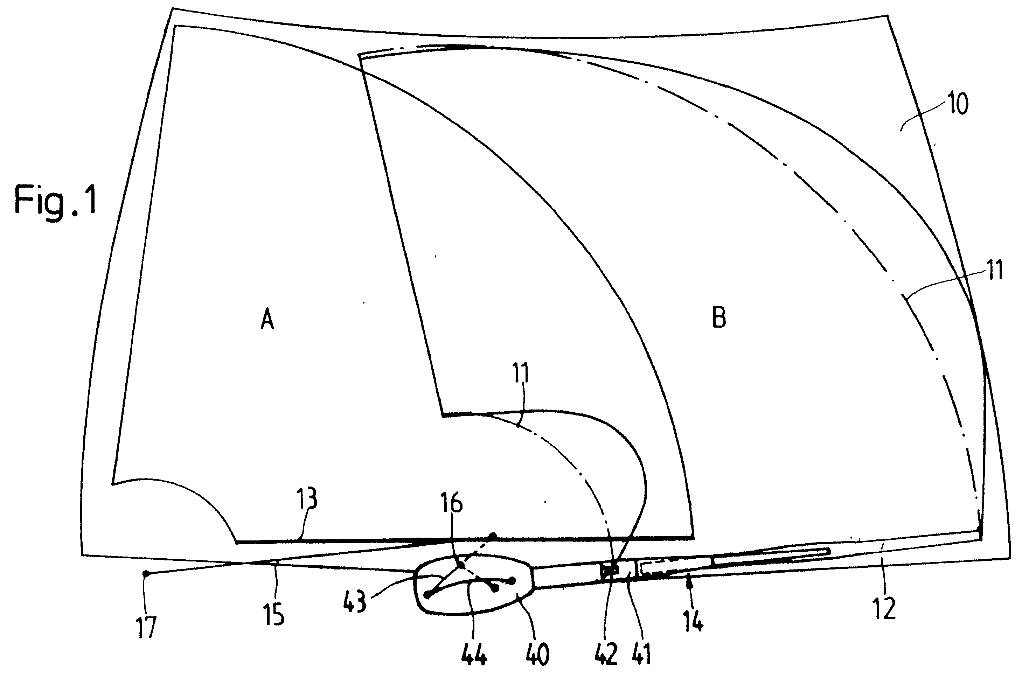

In Figur 1 ist mit 10 die Windschutzscheibe eines Kraftfahrzeuges bezeichnet auf der die Wischfelder A und B zweier Wischblätter 12 und 13 angedeutet sind. Das Wischfeld A wird dabei von dem Wischblatt 13 überstrichen, das in bekannter Weise nur pendelnd zwischen zwei Umkehrlagen angetrieben wird. Das Wischfeld B wird dagegen von dem Wischblatt 12 überstrichen, das während der Pendelbewegung auch in seiner Längsrichtung hin- und hergeschoben wird. In dem Wischfeld B ist durch strichpunktierte Linien 11 die Größe eines Wischfelds eines nur pendelnd angetriebenen Wischblattes angedeutet, so daß erkennbar wird, daß mit dem hin- und herschiebbaren Wischblatt ein größeres Wischfeld erzielt wird. Dabei soll das vergrößerte Wischfeld B auf der Fahrerseite erzeugt werden. Beide Wischblätter 12 und 13 sind an einen Wischarm 14 beziehungsweise 15 angelenkt. Die Längsbewegung des Wischblatts 12 wird dadurch erreicht, daß die wirksame Länge des Wischarms 14 verändert wird. Der Wischarm 15 besitzt eine feste Länge.

Der Wischarm 14 ist drehfest auf einer Wischerwelle 16 und der Wischarm 15 drehfest auf einer Wischerwelle 17 befestigt. Beide Wischerwellen 16 und 17 sind in Wischlagern 18 und 19 drehbar gelagert, die an einem fahrzeugfesten Tragrahmen 20 befestigt sind. Die Wischerwellen 16 und 17 besitzen also fahrzeugfeste Achsen.

Ein Elekromotor 25, der in nicht näher dargestellter, jedoch allgemein bekannter Weise ein Schneckengetriebe mit einem Schneckenrad als Abtriebsrad besitzt und der zwischen den beiden Wischlagern 18 und 19 an den Tragrahmen 20 angeschraubt ist, treibt über ein Koppelgetriebe die beiden Wischerwellen 16 und 17 an. Zu dem Koppelgetriebe gehört zunächst die umlaufende Motorkurbel 26, die unverdrehbar auf der Abtriebswelle 27 befestigt ist. Eine erste Schubstange 28 ist mit ihrem einen Ende über einen auf der Motorkurbel 26 sitzenden Kugelbolzen 30 und eine an die Schubstange 28 angespritzte Kugelschale 31 an die Motorkurbel 26 und mit ihrem anderen Ende an eine Schwinge 29 angelenkt, die fest mit der Wischerwelle 16 verbunden ist. Auch das Gelenk zwischen der Schwinge 29 und der Schubstange 28 wird durch einen Kugelbolzen 30 an der Schwinge und eine Kugelschale 31 an der Schubstange gebildet. Der Kugelbolzen 30 durchquert die Schwinge 29 und weist auf beiden Seiten der Schwinge eine Kugel auf. Mit Hilfe der zweiten Kugel und einer Kugelschale 31 ist mit ihrem ersten Ende eine zweite Schubstange 33 an die Schwinge 29 angelenkt. Mit ihrem anderen Ende ist die Schubstange 33 ebenfalls über einen Kugelbolzen 30 und eine Kugelschale 31 mit einer Schwinge 34 verbunden, die verdrehsicher an der Wischerwelle 17 sitzt.

Im Betrieb wird die Schwinge 29 über die umlaufende Motorkurbel 26 und die Schubstange 28 in eine hin- und hergehende, also in eine pendelnde Bewegung versetzt. Diese pendelnde Bewegung wird über die Schubstange 33 auch auf die Schwinge 34 übertragen. Dabei sind die Schwingen und Schubstangen so angeordnet, daß sich die beiden Schwingen 29 und 34 gleichphasig bewegen. Die Wischarme 14 und 15 werden also beide entweder im Uhrzeigersinn oder entgegen dem Uhrzeigersinn verschwenkt.

Mit Hilfe der bisher beschriebenen Getriebeteile können lediglich Pendelbewegungen der Wischarme 14 und 15 erzeugt werden.

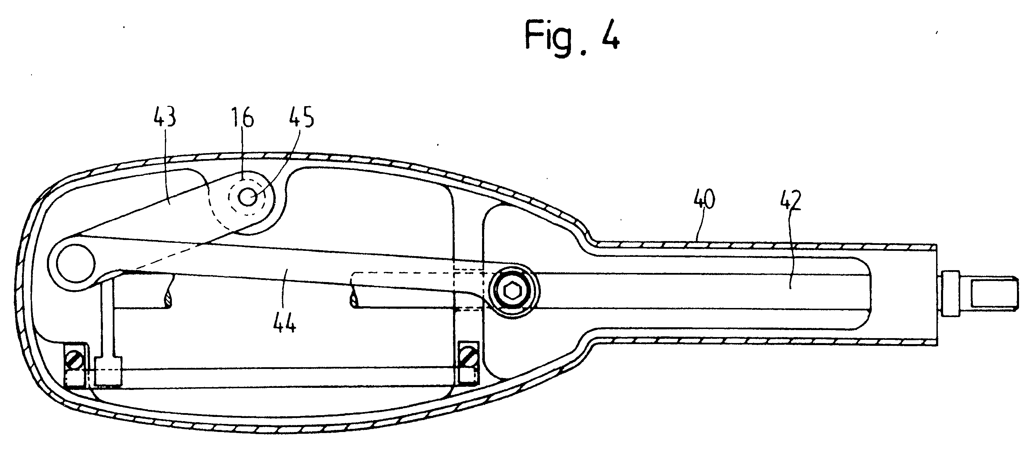

Um eine Längenveränderung des Wischarms 14 zu ermöglichen besteht dieser im wesentlichen aus einem ersten Abschnitt 40 in Form eines Führungsgehäuses, das während des Betriebs lediglich eine pendelnde Bewegung ausführt, und einem zweiten Abschnitt 41, der mit einem Kolben 42 im Führungsgehäuse 40 längsverschiebbar gelagert ist und dem vom Führungsgehäuse 40 die Pendelbewegung übermittelt wird. Die Hin-und Herbewegung des Kolbens 42 wird durch eine schwingende Hubkurbel 43 erhalten, die mit Kolben 42 über ein Pleuel 44 verbunden ist und deren Achse mit der Achse der Wischerwelle 16 zusammenfällt. Kurbel 43 und Pleuel 44 befinden sich im Führungsgehäuse 40. Wie deutlich aus den Figuren 1 und 4 ersichtlich ist, befindet sich die Achse der Wischerwelle 16 und damit die der Hubkurbel 43 seitlich der Achse des Kolbens 42. Dieser wird also nicht radial sondern tangential zur Achse der Wischerwelle 16 aus- und eingefahren. Die Anordnung ist so getroffen, daß in der in Figur 1 gezeigten Parkstellung des Wischarms 14 der Kolben 42 unterhalb der Wischerwelle 16 liegt. Das zur Wischerwelle 16 asymetrische Gehäuse 40 beeinträchtigt deshalb in der Parkstellung nicht die Sicht durch die Windschutzscheibe 10.

Die Hubkurbel 43 ist an einer Hubwelle 45 befestigt, die durch die hohle Wischerwelle 16 führt und, vom Führungsgehäuse 40 aus gesehen, jenseits des Lagers 18 über die Wischerwelle 16 vorsteht. An dem vorstehenden Ende ist an der Hubwelle 45 eine Hubschwinge 46 befestigt, an die über zwei Kreuzlenker 47 eine Koppel 48 mit ihrem einen Ende angelenkt ist. An ihrem anderen Ende ist die Koppel 48 über einen Kugelbolzen 30 und eine Kugelschale 31 gelenkig mit einem Hebel 49 verbunden.

Dieser Hebel 49 gehört zu einem Zwischenhebel 55, der außerdem eine Schwinge 56 und eine Welle 57 aufweist, die in einem Lager 58 drehbar ist und an der in einem axialen Abstand voneinander auf der einen Seite des Lagers der Hebel 49 und auf der anderen Seite des Lagers die Schwinge 56 befestigt sind. Durch den axialen Versatz wird erreicht, daß die Bewegungsebene des Hebels 49 und der Kreuzlenker 47 zwischen der Koppel 48 und der Hubschwinge 46 weitgehend identisch sind. Das Lager 58 ist zwischen den beiden Wischerwellen 16 und 17 in der Nähe des Motors 25 am Tragrahmen 20 befestigt.

Der Zwischenhebel 55 ist über eine Treibstange 60 bewegbar, die an ihrem einen Ende über zwei Kreuzlenker 47 mit der Schwinge 56 des Zwischenhebels und an ihrem anderen Ende über einen Kugelbolzen 30 und eine Kugelschale 31 gelenkig mit der Wischerwellenschwinge 29 verbunden ist. Dabei liegt der Anlenkpunkt der Treibstange 60 an der Schwinge 29 dem Anlenkpunkt der Schubstange 28 an der schwinge 29 bezüglich der Wischerwelle 16 gegenüber. Das heißt, daß die Längsbewegungen der Schubstange 28 und der Treibstange 60 jeweils einander entgegengerichtet sind. Auch liegen die Anlenkpunkte zwischen der Schubstange 28 und der Schwinge 29 sowie zwischen der Treibstange 60 und der Schwinge 29 auf verschiedenen Seiten der Schwinge 29 und sind axial gegeneinander versetzt. Dadurch wird wiederum erreicht, daß sich die Treibstange 60 weitgehend nur in einer Ebene bewegt.

Im Betrieb wird die Treibstange 60 über die Motorkurbel 26, die Schubstange 28 und die Schwinge 29 in eine hin- und hergehende Bewegung versetzt, die über die Kreuzlenker 47 in eine schwingende Bewegung des Zwischenhebels 55 umgewandelt wird. Dabei ist die Anordnung so getroffen, daß der Zwischenhebel 55 gleichsinnig mit der Schwinge 29 dreht. Während eines halben Wischzyklus, also während einer Bewegung der Schwinge 29 von einer Umkehrlage in die andere, wird der Zwischenhebel 55 um etwa 140 ° verschwenkt. Um diesen Winkel wird auch der Hebel 49 verschwenkt, der Teil des Zwischenhebels 55 ist. Die Verschwenkung des Hebels 49 wird über die Koppel 48 und die Kreuzlenker 47 in eine Bewegung der Hubschwinge 46 umgewandelt. Die wirksame Hebellänge zwischen der Treibstange 60 und dem Zwischenhebel 55 ist kleiner als die wirksame Hebellänge zischen der Koppel 48 und dem Zwischenhebel 55, so daß man zwischen den Längsbewegungen der Treibstange 60 und der Koppel 48 eine Übersetzung erhält. Wesentlich ist nun, daß bei einem Schwingen des Zwischenhebels 55 von einer Endlage zur anderen die Richtung des Hebels 49 mit der Längsrichtung der Koppel 48 zur Deckung kommt. Insbesondere nehmen dann in dem beschriebenen Ausführungsbeispiel Hebel 49 und Koppel 48 eine gestreckte Lage zueinander ein. Beim Durchlaufen des Totpunkts kehrt die Koppel 48 die Richtung ihrer Längsbewegung um, so daß auch die Drehrichtung der Hubschwinge 46 umgekehrt wird, ohne daß sich die Drehrichtung des Zwischenhebels 55 ändert. Die Richtungsumkehr der Hubschwinge 46 führt zu einer Richrungsumkehr der Hubwelle 45, der Hubkurbel 43, des Pleuels 44 und des Kolbens 42.

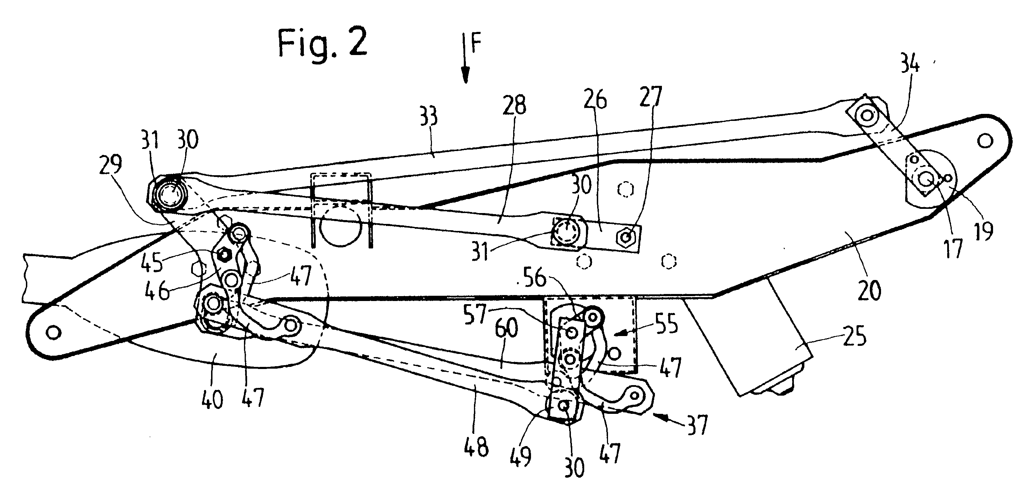

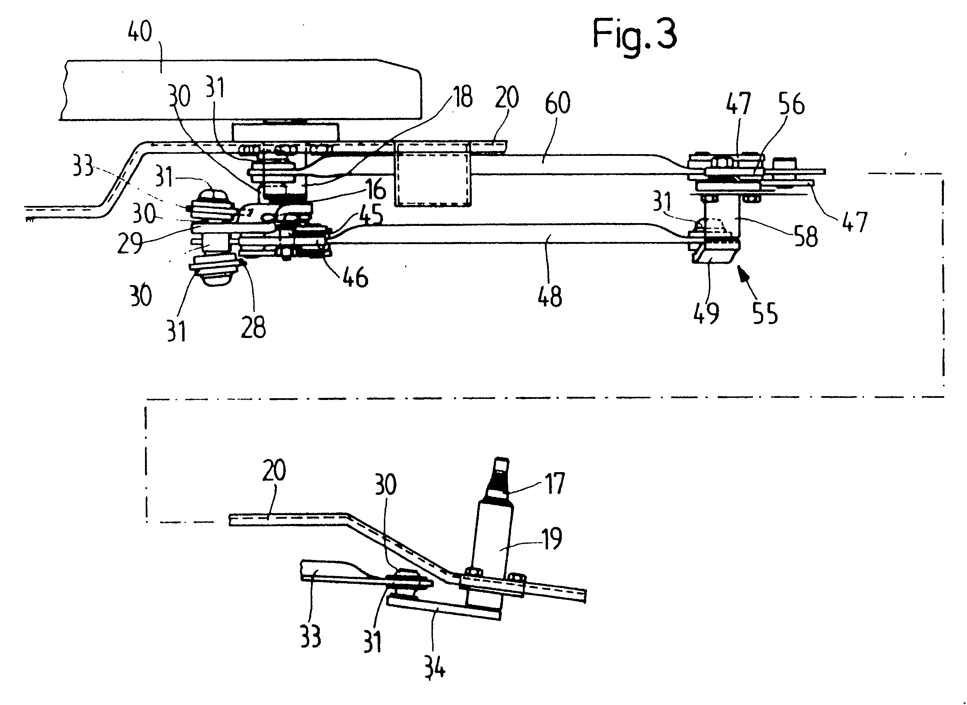

In der Figuren 1 bis 3 sind die einzelnen Teile der Scheibenwischeranlage in Positionen gezeichnet, die sie in der Parkstellung der Wischarme und Wischblätter einnehmen. Bei einem Antrieb der Schwinge 29 aus der Parkstellung heraus, in der Draufsicht nach Figur 2 also im Uhrzeigersinn, wird auch der Zwischenhebel 55 im Uhrzeigersinn verschwenkt. Auch der Hebel 49 des Zwischenhebels 55 wird im Uhrzeigersinn verschwenkt, wodurch sich die Koppel 48 in der Ansicht nach Figur 2, zunächst nach links bewegt und dadurch die Hubschwinge 46 ebenfalls im Uhrzeigersinn verschwenkt wird. Beim Loslaufen aus der Parkstellung bewegen sich also die Wischerwelle 16 und die Hubwelle 45 zunächst gleichsinnig. Nach einem Schwenkwinkel von etwa 90° durchläuft die Koppel 48 den Totpunkt und kehrt die Richtung ihrer Längsbewegung um. Bis zur Umkehrlage der Schwinge 29 und des Zwischenhebels 55 werden Hubschwinge 46 und Hubwelle 45 dann also entgegengesetzt zum Uhrzeigersinn gedreht. Bei der Rückkehr von der Umkehrlage zur Parkstellung drehen sich Hubschwinge 46 und Hubwelle 45 bis zu Erreichen der Totlage der Koppel 48 im Uhrzeigersinn und daran anschließend entgegen dem Uhrzeigersinn.

Durch Variation der Ausgangslage des Hebels 49 kann man nun leicht die Größe der Winkel verändern, die die Hubschwinge 46 und die Hubwelle 45 gleichsinnig und gegensinnig zur Schwinge 29 durchlaufen. Im in den Figuren 1 bis 4 gezeigten Ausführungsbeispiel ist die Wahl so getroffen und sind die Hebellängen und Koppellängen so darauf abgestimmt, daß der Winkel, in dem sich die Hubwelle 45 gegensinnig zur Wischerwelle 16 dreht, etwa 70 Grad und der Winkel, in dem sich die Hubwelle 45 gleichsinnig zur Wischerwelle 16 dreht, etwa 170-180 Grad beträgt.

In den Figuren 1 und 4 ist die der Parkstellung entsprechende Position der Hubkurbel 43 im Führungsgehäuse 40 mit durchgehenden Linien eingezeichnet. Beim Losfahren aus der Parkstellung wird die Hubkurbel 43 entsprechend der zur Ansicht nach Figur 2 entgegengerichteten Ansichten nach den Figuren 1 und 4 zunächst entgegen dem Uhrzeigersinn etwa 180° gedreht und dabei der Kolben 42 stetig aus dem Führungsgehäuse 40 herausgeschoben. Dann durchläuft die Koppel 48 ihren Totpunkt und die Drehrichtung der Hubkurbel 43 kehrt sich um. Anschließend durchläuft die Hubkurbel 43 einen Winkel von etwa 70° im Uhrzeigersinn und zieht dabei den Kolben 42 wieder ganz in das Führungsgehäuse 40 zurück.

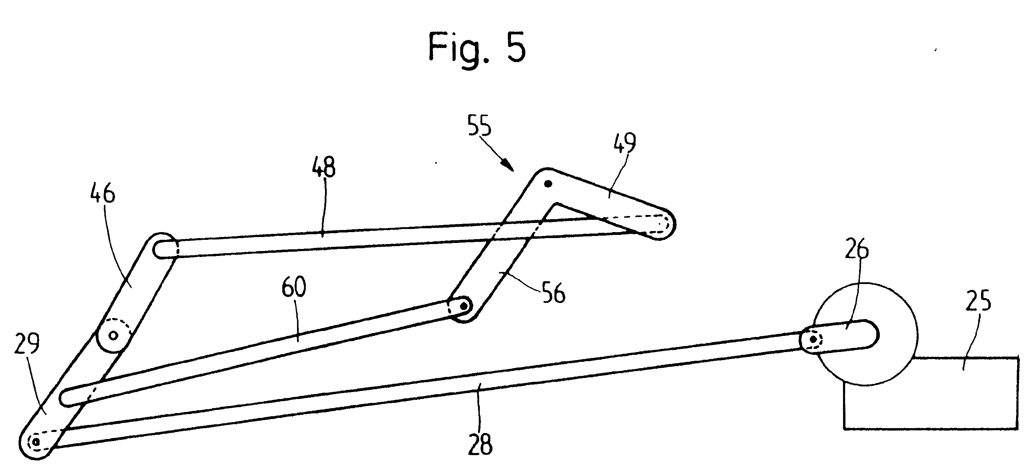

Bei der Ausführung nach Figur 5, die nur in einer Prinzipskizze dargestellt ist, wird wiederum von einem Elektromotor 25 über eine Motorkurbel 26 und eine Schubstange 28 eine Wischerwellenschwinge 29 pendelnd angetrieben. Die Bewegung der Schwinge 29 wird über eine Treibstange 60 auf den Zwischenhebel 55 übertragen. Die Treibstange 60 ist direkt ohne Kreuzlenker an der Schwinge 56 des Hebels 55 angelenkt. Der Anlenkpunkt der Treibstange 60 an der Schwinge 29 liegt mit der Achse der Schwinge 29 und dem Anlenkpunkt der Schubstange 28 an der Schwinge 29 auf einer Linie. Die Koppel 48 ist am Hebel 49 des Zwischenhebels 55 und an der Hubschwinge 46 jeweils direkt angelenkt. Die beiden Hebel 56 und 49 des Zwischenhebels 55 sind in einem Winkel so zueinander angeordnet, daß die Koppen 48 während der Bewegung der Schwinge 56 einen Totpunkt durchläuft. In diesem Totpunkt kommen der Hebel 49 und die Koppel 48 zur Deckung. Anders als bei dem Ausführungsbeispiel nach den Figuren 1 und 4 sind nun jedoch Hebel 49 und Koppel 48 im Totpunkt nicht gestreckt, sondern um 180 Grad gegeneinander gerichtet.

Die in Figur 5 gezeigten Positionen der Getriebeglieder sollen wiederum der Parkstellung der Wischarme und Wischblätter entsprechen. Beim Anschalten des Elektromotors 25 werden die Schwinge 29 und der Zwischenhebel 55 entgegen dem Uhrzeigersinn verschwenkt. der Hebel 49 nimmt eine solche Lage ein, daß die Koppel 48 zunächst nach rechts bewegt wird, so daß sie die Hubschwinge 46 im Uhrzeigersinn, also entgegen der Schwinge 29 verschwenkt. Nach dem Durchlaufen des Totpunkts schwenkt die Koppel 48 die Hubschwinge 46 entgegen dem Uhrzeigersinn.

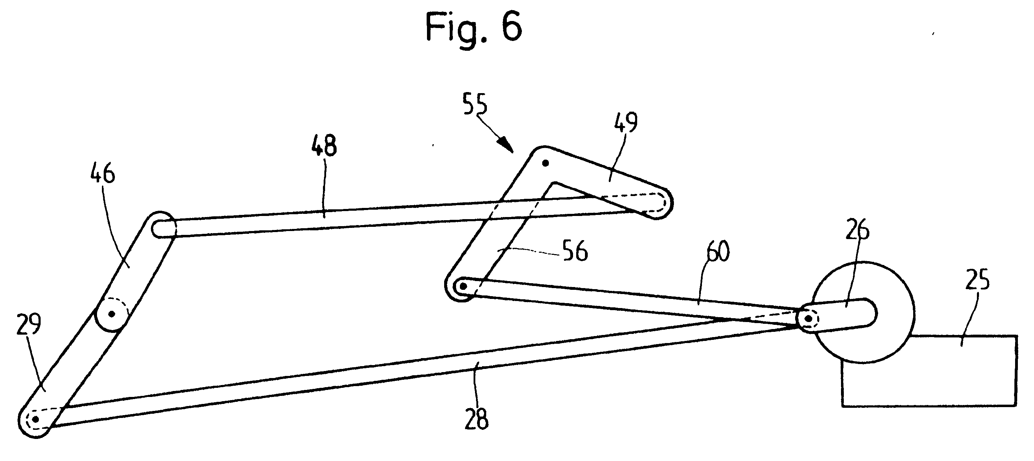

Die Ausführung nach Figur 6 unterscheidet sich von der nach Figur 5 lediglich dadurch, daß nun der Zwischenhebel 55 über eine Treibstange 60 direkt von der Motorkurbel 26 des Elektromotors 25 angetrieben wird. Dabei kann es, wie die Figur 6 zeigt, zu einer Phasenverschiebung zwischen den Schwingungen der Schwinge 29 und des Zwischenhebels 55 kommen. Man sieht nämlich, daß die Schubstange 28 und die Motorkurbel 26 in der gezeigten Parkstellung der Wischarme und Wischblätter eine Strecklage zueinander einnehmen, während die Treibstange 60 und die Motorkurbel 26 noch einen Winkel ungleich 180 Grad miteinander bilden. Gelöst werden könnte dieses Problem dadurch, daß man den Anlenkpunkt der Treibstange 60 an der Motorkurbel 26 vom Anlenkpunkt der Schubstange 28 trennt, so daß die Strecklagen gleichzeitig durchlaufen werden. Eine andere Lösung wäre, den Zwischenhebel 55 bezüglich des Motors 25 und der Schwinge 29 so anzuordnen, daß die Treibstange 60 und die Schubstange 28 in den Strecklagen übereinanderliegen.

**Ansprüche**

1. Scheibenwischeranlage, insbesondere für Kraftfahrzeuge mit einem von einem Antriebsmotor (25) über Bewegungsübertragungsmittel (26, 28, 29) um die Achse einer Wischerwelle (16) pendelnd antreibbaren Wischarm (14), der ein Wischblatt (12) trägt, das während seiner Pendelbewegung mittels eines über eine koaxial zur Wischerwelle (16) verlaufenden Hubwelle (45) antreibbaren Getriebes (43, 44) in seiner Längserstreckung verschiebbar ist, wobei die Hubwelle (45) insbesondere über eine Hubschwinge (46) mit einer Koppel (48) verbunden ist, die an einen Zwischenhebel (55) angelenkt ist, der vom Antriebsmotor um eine feste Achse schwingend antreibbar ist, dadurch gekennzeichnet, daß die Koppel (48) während einer Verschwenkung des Zwischenhebels (55) von einer Umkehrlage zur anderen einen Totpunkt durchläuft, in dem sie die Richtung ihrer Längsbewegung umkehrt.

2. Scheibenwischeranlage nach Anspruch 1, dadurch gekennzeichnet, daß während jeder Drehung der Wischerwelle (16) von einer Umkehrlage zur andern der Schwenkwinkel der Hubwelle (45), in dem sich diese gegensinnig zur Wischerwelle (16) dreht, wesentlich kleiner ist als der Winkel, in dem sich die Hubwelle (45) gleichsinnig zur Wischerwelle (16) dreht, daß insbesondere der kleinere Winkel etwa 70 Grad und der größere Winkel etwa 170-180 Grad beträgt.

3. Scheibenwischeranlage nach Anspruch 1 oder 2, dadurch gekennzeichnet, daß bei einer Bewegung des Wischblatts (12) aus einer Parkstellung Wischerwelle (16) und Hubwelle (45) zunächst gleichsinneg drehen.

4. Scheibenwischeranlage nach einem der Ansprüche 1 bis 3, dadurch gekennzeichnet, daß die Koppel (48) an den Zwischenhebel (55) an einem solchen Punkt angelenkt ist, daß bei einem Schwingen des Zwischenhebels (55) der Hebelarm (49) von der Achse des Zwischenhebels (55) zum Anlenkpunkt mit der Längsrichtung der Koppel (48) zur Deckung kommt.

5. Scheibenwischeranlage nach Anspruch 4, dadurch gekennzeichnet, daß der Zwischenhebel (55) über eine Treibstange (60) antreibbar ist, die an dem Zwischenhebel (55) direkt angelenkt ist, wobei die beiden Hebelarme (49, 56) zum Anlenkpunkt der Koppel (48) und zum Anlenkpunkt der Treibstange (60) einen Winkel miteinander bilden.

6. Scheibenwischeranlage nach Anspruch 4, dadurch gekennzeichnet, daß der Zwischenhebel (55) über eine Treibstange (60) antreibbar ist, die an ihn über Kreuzlenker (47) angelenkt ist.

7. Scheibenwischeranlage nach einem der vorhergehenden Ansprüche, dadurch gekennzeichnet, daß der Zwischenhebel (55) um etwa 140 Grad verschwenkbar ist.

8. Scheibenwischeranlage nach einem der Ansprüche 5 bis 7, dadurch gekennzeichnet, daß der wirksame Hebelarm zwischen Zwischenhebelachse und Treibstange (60) kleiner ist als der wirksame Hebelarm (49) zwischen Zwischenhebelachse und Koppel (48).

9. Scheibenwischeranlage nach einem der Ansprüche 5 bis 8, dadurch gekennzeichnet, daß die Koppel (48) und die Treibstange (60) in Richtung der Achse des Zwischenhebels (55) in einem Abstand voneinander mit dem Zwischenhebel (55) verbunden sind.

10. Scheibenwischeranlage nach Anspruch 9, dadurch gekennzeichnet, daß der Zwischenhebel zwei über eine drehbar gelagerte Welle (57) verbundene Teilhebel (49, 56) aufweist und daß die Koppel (48) mit dem einen und die Treibstange (60) mit dem anderen Teilhebel (49, 56) verbunden ist.

11. Scheibenwischeranlage nach einem der vorhergehenden Ansprüche, dadurch gekennzeichnet, daß der Zwischenhebel (55) auf derselben Seite der Wischerwelle (16) angeordnet ist wie der Antriebsmotor (25).

12. Scheibenwischeranlage nach einem der vorhergehenden Ansprüche, dadurch gekennzeichnet, daß eine zweite Wischerwelle (17) zum Antrieb eines zweiten Wischarms (15) vorhanden ist und daß der Zwischenhebel (55) zwischen den beiden Wischerwellen (16, 17) angeordnet ist.

13. Scheibenwischeranlage nach einem der vorhergehenden Ansprüche, dadurch gekennzeichnet, daß ein Tragrahmen (20) vorhanden ist, an dem der Zwischenhebel (55) und der Antriebsmotor (25) und-/oder ein Lager (18, 19) für eine Wischerwelle (16, 17) befestigt sind.

14. Scheibenwischeranlage nach einem der vorhergehenden Ansprüche, dadurch gekennzeichnet, daß der Zwischenhebel (55) über eine Treibstange (60) von einer mit der den Wischarm (14) mit dem verschiebbaren Wischblatt (12) tragenden Wischerwelle (16) drehfest verbundenen Wischerwellenschwinge (29) antreibbar ist.

15. Scheibenwischeranlage nach Anspruch 14, dadurch gekennzeichnet, daß an die Wischerwellenschwinge (29) eine vom Antriebsmotor (25) bewegbare Schubstange (28) angelenkt ist, und daß sich Schubstange (28) und Treibstange (60) auf gegenüberliegenden Seiten der Wischerwelle (16) befinden.

16. Scheibenwischeranlage nach Anspruch 14 oder 15, dadurch gekennzeichnet, daß sich die Koppel (48) und die Treibstange (60) in Richtung der Wischerwelle (16) betrachtet axial versetzt zueinander auf gegenüberliegenden Seiten der Wischerwellenschwinge (29) befinden.

17. Scheibenwischeranlage nach einem der Ansprüche 1 bis 13, dadurch gekennzeichnet, daß der Zwischenhebel (55) über eine Treibstange (60) direkt vor einer Kurbel (26) des Antriebsmotors (25) antreibbar ist.

18. Scheibenwischeranlage nach einem der vorhergehenden Ansprüche, dadurch gekennzeichnet, daß der Zwischenhebel (55) und die Wischerwellenschwinge (29) gleichsinnig antreibbar sind.

## Claims

1. A wiper system, especially for motor vehicles comprising a wiper arm (14) that can be driven in pendulum-motion around the axis of a wiper shaft (16) via motion transferring means (26, 28, 29) by a drive motor (25), which wiper arm (14) carries a wiper blade (12) that during its pendulum-motion can be shifted in longitudinal direction by means of a gear (43, 44) which can be driven via an stroking shaft (45) coaxially running to the wiper shaft (16), whereby the stroking shaft (45) is – especially via an stroking swivelling lever (46) – connected with a coupler (48), which coupler (48) is linked to an intermediate lever (55) that can swivellably be driven by a drive motor around a fixed axis, wherein the coupler (48) passes a dead center when the intermediate lever (55) is swivelled from the one reversing position to the other, in which dead center the direction of the longitudinal motion of the coupler (48) is reversed.

2. A wiper system according to claim 1, wherein during each rotation of the wiper shaft (16) from the one reversing position to the other the swivelling angle of the stroking shaft (45), in which said stroking shaft (45) rotates in the opposite direction to the wiper shaft (16) is essentially smaller than the angle in which the stroking shaft (45) rotates in the same direction as the wiper shaft (16), wherein especially the smaller angle is about 70 degrees and the bigger angle is about 170-180 degrees.

3. A wiper system according to claim 1 or 2, wherein, at first upon the wiper blade's (12) moving out of a parking position, the wiper shaft (16) and the stroking shaft (45) rotate in the same direction.

4. A wiper system according to one of the claims 1 to 3, wherein the coupler (48) is linked to the intermediate lever (55) at such a point that upon swivelling the intermediate lever (55), the lever arm (49) from the axis of the intermediate lever (55) up to the linking point is made congruent with the longitudinal direction of the coupler (48).

5. A wipper system according to claim 4, wherein the intermediate lever (55) can be driven via a drive rod (60) directly linked to the intermediate lever (55), whereby the lever arm (49) from the axis of the intermediate lever up to the linking point of the coupler (48) and the lever arm (56) from the axis of the intermediate lever up to the linking point of the drive rod (60) enclose an angle.

6. A wiper system according to claim 4, wherein the intermediate lever (55) can be driven via a drive rod (60) which is linked to it via cross linkages (47).

7. A wiper system according to one of the preceding claims, wherein the intermediate lever (55) can be swivelled around approximately 140 degrees.

8. A wiper system according to one of the claims 5 to 7, wherein the effective lever arm between the axis of the intermediate lever and the drive rod (60) is smaller than the effective lever arm (49) between the axis of the intermediate lever and the coupler (48).

9. A wiper system according to one of the claims 5 to 8, wherein the coupler (48) and the drive rod (60) are connected with the intermediate lever (55) at a certain distance of each other in the direction of the axis of the intermediate lever (55).

10. A wiper system according to claim 9, wherein the intermediate lever comprises two partial levers (49, 56) connected with each other via a shaft rotatably located (57) and wherein the coupler (48) is connected with the one partial lever and the drive rod (60) is connected with the other partial lever (49, 56).

11. A wiper system according to one of the preceding claims, wherein the intermediate lever (55) is located on the same side of the wiper shaft (16) as the drive motor (25).

12. A wiper system according to one of the preceding claims, wherein there is a second wiper shaft (17) for driving a second wiper arm (15) and wherein the intermediate lever (55) is arranged between the two wiper shafts (16, 17).

13. A wiper system according to one of the preceding claims, wherein there is a support frame (20) onto which the intermediate lever (55) and the drive motor (25) and/or a bearing (18, 19) for a wiper shaft (16, 17) are fixed.

14. A wiper system according to one of the preceding claims, wherein the intermediate lever (55) can be driven via a drive rod (60) by a wiper shaft swivelling lever (29) non-rotatably connected with the wiper shaft (16) carrying the wiper arm (14) with the wiper blade (12) movable in the longitudinal direction.

15. A wiper system according to claim 14, wherein a push rod (28) which can be moved by the drive motor (25), is linked to the wiper shaft swivelling lever (29), and wherein the push rod (28) and the drive rod (60) are situated on opposite sides of the wiper shaft (16).

16. A wiper system according to claim 14 or 15, wherein the coupler (48) and the drive rod (60), looked at in the direction of the wiper shaft (16), are axially displaced to each other on opposite sides of the wiper shaft swivelling lever (29).

17. A wiper system according to one of the claims 1 to 13, wherein the intermediate lever (55) can be driven directly by a crank (26) of the drive motor (25) via a drive rod (60).

18. A wiper system according to one of the preceding claims, wherein the intermediate lever (55) and the wiper shaft swivelling lever (29) can be driven in the same direction.


## Revendications

1. Système essuie-glace, notamment pour les véhicules automobiles, avec un bras d'essuie-glace (14), qui peut être entraîné en un mouvement pendulaire autour de l'axe d'un arbre d'essuie-glace (16) par un moteur d'entraînement (25) et par l'intermédiaire de moyens de transmission de mouvement (26, 28, 29), et qui porte un balai d'essuie-glace (12) qui, pendant son mouvement pendulaire, peut être déplacé en translation dans son sens longitudinal à l'aide d'un mécanisme de transmission (43, 44) qui peut être entraîné par l'intermédiaire d'un arbre de translation (45) s'étendant coaxialement à l'arbre d'essuie-glace (16), l'arbre de translation (45) étant notamment relié, par l'intermédiaire d'une coulisse de translation (46), à une barre de liaison (48) qui est articulée à un levier intermédiaire (55) qui peut être entraîné en oscillation autour d'un axe fixe par le moteur d'entraînement, caractérisé en ce que la barre de liaison (48), pendant un pivotement du levier intermédiaire (55) d'une position de renversement de marche à l'autre, passe par un point mort où s'inverse la direction de son déplacement longitudinal.

2. Système essuie-glace selon la revendication 1, caractérisé en ce que, pendant chaque rotation de l'arbre d'essuie-glace (16) d'une position de renversement à l'autre, l'angle de pivotement de l'arbre de translation (45), dans lequel ce dernier tourne en sens contraire de l'arbre d'essuie-glace (16), est nettement inférieur à l'angle dans lequel l'arbre de translation (45) tourne dans le même sens que l'arbre d'essuie-glace (16), et en ce que l'angle plus petit et notamment égal à environ 70° et l'angle plus grand à environ 170-180°.

3. Système essuie-glace selon la revendication 1 ou 2, caractérisé en ce que, lors d'un déplacement du balai d'essuie-glace (12) à partir d'une position d'arrêt fixe, l'arbre d'essuie-glace (16) et l'arbre de translation (45) tournent initialement dans le même sens.

4. Système essuie-glace selon l'une des revendications 1 à 3, caractérisé en ce que la barre de liaison (48) est articulée au levier intermédiaire (55) en un point tel que, lors d'une oscillation du levier intermédiaire (55), le bras de levier (49), en partant de l'axe du levier intermédiaire (55), arrive en recouvrement, au point d'articulation, avec le sens longitudinal de la barre de liaison (48).

5. Système essuie-glace selon la revendication 4, caractérisé en ce que le levier intermédiaire (55) peut être entraîné par l'intermédiaire d'une bielle motrice (60) qui est directement articulée au levier intermédiaire (55), les deux bras de levier (49, 56), vers le point d'articulation de la barre de liaison (48) et vers le point d'articulation de la bielle motrice (60), formant entre eux un angle.

6. Système essuie-glace selon la revendication 4, caractérisé en ce que le levier intermédiaire (55) peut être entraîné par l'intermédiaire d'une bielle motrice (60) qui lui est articulée par l'intermédiaire de bielles croisées (47).

7. Système essuie-glace selon l'une des revendications précédentes, caractérisé en ce que le levier intermédiaire (55) peut être pivoté d'environ 140 degrés.

8. Système essuie-glace selon l'une des revendications 5 à 7, caractérisé en ce que le bras de levier actif entre l'axe du levier intermédiaire et la bielle motrice (60) est inférieur au bras de levier actif (49) entre l'axe du levier intermédiaire et la barre de liaison (48).

9. Système essuie-glace selon l'une des revendications 5 à 8, caractérisé en ce que la barre de liaison (48) et la bielle motrice (60) sont reliées au levier intermédiaire à distance l'une de l'autre dans le sens de l'axe du levier intermédiaire (55).

10. Système essuie-glace selon la revendication 9, caractérisé en ce que le levier intermédiaire présente deux leviers partiels (49, 56) reliés par l'intermédiaire d'un arbre (57) monté rotatif, et en ce que la barre de liaison (48) est reliée à l'un des leviers partiels (49, 56), et la bielle motrice (60) à l'autre.

11. Système essuie-glace selon l'une des revendications précédentes, caractérisé en ce que le levier intermédiaire (55) est disposé du même côté de l'arbre d'essuie-glace (16) que le moteur d'entraînement (25).

12. Système essuie-glace selon l'une des revendications précédentes, caractérisé en ce qu'un deuxième arbre d'essuie-glace (17) est présent pour entraîner un deuxième bras d'essuie-glace (15), et en ce que le levier intermédiaire (55) est disposé entre les deux arbres d'essuie-glace (16, 17).

13. Système essuie-glace selon l'une des revendications précédentes, caractérisé en ce qu'un cadre porteur (20) est présent, auquel sont fixés le levier intermédiaire (55) et le moteur d'entraînement (25), et/ou un palier de montage (18, 19) pour un arbre d'essuie-glace (16, 17).

14. Système essuie-glace selon l'une des revendications précédentes, caractérisé en ce que le levier intermédiaire (55) peut être entraîné, par l'intermédiaire d'une bielle motrice (60), par une coulisse d'arbre d'essuie-glace (29) qui est assemblée solidairement en rotation à l'arbre d'essuie-glace (16) qui porte le bras d'essuie-glace (14) muni du balai d'essuie-glace (12) mobile en translation.

15. Système essuie-glace selon la revendication 14, caractérisé en ce qu'une bielle de poussée (28), qui peut être mise en mouvement par le moteur d'entraînement (25), est articulée à la coulisse d'arbre d'essuie-glace (29), et en ce que la bielle de poussée (28) et la bielle motrice (60) se trouvent sur des côtés opposés de l'arbre d'essuie-glace (16).

16. Système essuie-glace selon la revendication 14 ou 15, caractérisé en ce que la barre de liaison (48) et la bielle motrice (60) se trouvent, vu en direction de l'arbre d'essuie-glace (16), axialement décalées l'une par rapport à l'autre sur des côtés opposés de la coulisse d'arbre d'essuie-glace (29).

17. Système essuie-glace selon l'une des revendications 1 à 13, caractérisé en ce que le levier intermédiaire (55) peut être directement entraîné par une manivelle (26) du moteur d'entraînement (25), par l'intermédiaire d'une bielle motrice (60).

18. Système essuie-glace selon l'une des revendications précédentes, caractérisé en ce que le levier intermédiaire (55) et la coulisse d'arbre d'essuie-glace (29) peuvent être entraînés dans le même sens.

# Fig.1

A

B

10

11

11

13

16

15

17

43

44 40 42 41 14

12

EP 0 352 586 B1

Fig. 2

EP 0 352 586 B1

Fig.3

Fig. 4

# Fig. 5

EP 0 352 586 B1

Fig. 6